# EUROPÄISCHE PATENTSCHRIFT

(11) **EP 4 164 948 B1**
(45) Veröffentlichungstag und Bekanntmachung des Hinweises auf die Patenterteilung: **29.01.2025**
(21) Anmeldenummer: 21730104.3
(22) Anmeldetag: 17.05.2021
(51) Int. Cl.: B64D 11/06, E05B 41/00

(54) **FLUGZEUGSITZMODUL**
AIRCRAFT SEAT MODULE
MODULE DE SIÈGE D'AÉRONEF

(30) Priorität: 12.06.2020 DE 102020115567
(43) Veröffentlichungstag der Anmeldung: 19.04.2023
(73) Patentinhaber: Recaro Aircraft Seating GmbH & Co. KG, 74523 Schwäbisch Hall (DE)
(72) Erfinder: RECHLIN, Alexander, 74523 Schwäbisch Hall (DE)
(74) Vertreter: Daub, Thomas
(86) Internationale Anmeldenummer: PCT/EP2021/063026
(87) Internationale Veröffentlichungsnummer: WO 2021/249726

(56) Entgegenhaltungen:
- EP-A1- 3 225 548
- WO-A1-2017/066559
- US-A1- 2013 241 247

## Beschreibung

### Stand der Technik

Die Erfindung betrifft ein Flugzeugsitzmodul nach dem Oberbegriff des Patentanspruchs 1.

Die Druckschrift EP 3 225 548 A1 offenbart ein Flugzeugsitzmodul mit einem Fluggastsitzbereich, mit einer Türeinheit, die zumindest dazu vorgesehen ist, zumindest in einem Betriebszustand einen Durchgangsbereich zu dem Fluggastsitzbereich zu verschließen, mit einer Verriegelungsvorrichtung für die Türeinheit, die dazu vorgesehen ist, die Türeinheit in einer geöffneten Stellung, insbesondere einer maximal geöffneten Verstaustellung, zu verriegeln und dazu zumindest eine Aktuatorvorrichtung umfasst, die zumindest zwei beweglich gelagerte Verriegelungselemente aufweist, die jeweils zwischen einer Verriegelposition und einer Entriegelposition verstellbar sind.

Die Druckschrift US 2013/0241247 A1 offenbart ein Flugzeugsitzmodul mit einem Fluggastsitzbereich, mit einer Türeinheit, die zumindest dazu vorgesehen ist, zumindest in einem Betriebszustand einen Durchgangsbereich zu dem Fluggastsitzbereich zu verschließen, mit einer Verriegelungsvorrichtung für die Türeinheit, die dazu vorgesehen ist, die Türeinheit in einer geöffneten Stellung, insbesondere einer maximal geöffneten Verstaustellung, zu verriegeln.

Die Aufgabe der Erfindung besteht insbesondere darin, eine gattungsgemäße Vorrichtung mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzmodul mit einem Fluggastsitzbereich, mit einer Türeinheit, die zumindest dazu vorgesehen ist, zumindest in einem Betriebszustand einen Durchgangsbereich zu dem Fluggastsitzbereich zu verschließen, mit einer Verriegelungsvorrichtung für die Türeinheit, die dazu vorgesehen ist, die Türeinheit in einer geöffneten Stellung, insbesondere einer maximal geöffneten Verstaustellung, zu verriegeln und dazu zumindest eine Aktuatorvorrichtung umfasst, die zumindest zwei beweglich gelagerte Verriegelungselemente aufweist, die jeweils zwischen einer Verriegelposition und einer Entriegelposition verstellbar sind.

Es wird vorgeschlagen, dass die Verriegelungsvorrichtung eine Verriegelungszustandsindikationseinheit aufweist, die dazu vorgesehen ist, in der maximal geöffneten Stellung der Türeinheit eine unvollständige Verriegelung zumindest eines der beiden Verriegelungselemente zu erfassen und anzuzeigen.

Unter einem "Flugzeugsitzmodul" soll vorzugsweise ein Modul verstanden werden, das einen Fluggastsitzbereich definiert und dazu wenigstens ein Umhausungselement, das den Fluggastsitzbereich zumindest teilweise von einem restlichen Kabinenbereich abtrennt, zumindest einen in dem Fluggastsitzbereich angeordneten Flugzeugsitz und weitere Elemente des Fluggastsitzbereichs umfasst, wie insbesondere eine Konsole, eine Ottomane und/oder eine Bildschirmeinheit. Der Flugzeugsitz ist vorzugsweise als ein Einzelsitz oder als ein Zweiersitz ausgebildet. Unter einem "Fluggastsitzbereich" soll vorzugsweise ein Bereich verstanden werden, in dem ein Flugzeugsitz, vorzugsweise ein als ein Einzelsitz ausgebildeter Flugzeugsitz, oder eine aus zwei Flugzeugsitzen gebildete Sitzeinheit angeordnet ist und der zum Aufenthalt wenigstens eines Passagiers während eines Fluges in einem Flugzeug vorgesehen ist. In einem Fluggastsitzbereich sind vorzugsweise weitere Elemente angeordnet, die von einem Passagier nutzbar sind, wie insbesondere eine Konsole, eine Ottomane, Verstaumöglichkeiten, Ablageelemente und/oder Entertainmentvorrichtungen. Der Fluggastsitzbereich ist als ein Teilbereich einer Kabine, vorzugsweise einer Flugzeugkabine, ausgebildet. Ein Fluggastsitzbereich grenzt vorzugsweise an zumindest einen Gangbereich der Kabine an. Unter einem "angrenzenden Kabinenbereich" soll vorzugsweise ein unmittelbar an den Fluggastsitzbereich angrenzender Bereich der Kabine, wie vorzugsweise ein Gangbereich, verstanden werden, über den der Fluggastsitzbereich von einem Passagier erreicht werden kann. Unter einer "Türeinheit" soll vorzugsweise eine Baugruppe verstanden werden, die dazu vorgesehen ist, den zumindest einen Fluggastsitzbereich in zumindest einem Betriebszustand zumindest teilweise von dem Rest der Kabine, vorzugsweise von zumindest einem Gangbereich der Kabine, abzutrennen. Vorzugsweise trennt die Türeinheit den zumindest einen Fluggastsitzbereich in zumindest einem Betriebszustand zumindest teilweise physisch, insbesondere so, dass ein Durchgang versperrt ist, und zumindest teilweise optisch, insbesondere zumindest teilweise blickdicht und vorzugsweise komplett blickdicht, von dem Rest der Kabine, insbesondere bis zu einer Höhe des wenigstens einen Umhausungselements, ab. Die Türeinheit ist zumindest zwischen einer geöffneten Stellung und einer geschlossenen Stellung verstellbar. Vorzugsweise kann die Türeinheit zusätzlich in zumindest einer Zwischenstellung zwischen dem geöffneten Zustand und dem geschlossenen Zustand gehalten werden. Die Türeinheit ist vorzugsweise aus einem festen Material, wie insbesondere einem Kunststoff, beispielsweise einem faserverstärkten Kunststoff, einem Verbundmaterial (Komposit-Platte), wie beispielsweise einem Sandwichmaterial mit einem Wabenkern, einem Metall, wie insbesondere einem Aluminium, oder von einem Rahmen, beispielsweise einem Aluminiumrahmen mit einer Bespannung aus einem Textil oder Leder, gebildet. Vorzugsweise kann eine Türeinheit auch als ein einfaches Abtrennelement, wie beispielsweise ein Privacy-Divider, ausgebildet sein. Unter einem "Durchgangsbereich" soll insbesondere ein Bereich verstanden werden, der zwischen dem Fluggastsitzbereich und dem Gangbereich der Kabine angeordnet ist, und durch den die beiden Bereiche miteinander verbunden sind. Durch den Durchgangsbereich kann sich eine Person, insbesondere ein Passagier, zwischen dem Fluggastsitzbereich und dem Gangbereich der Kabine bewegen. Unter einer "Lagervorrichtung" soll insbesondere eine Vorrichtung verstanden werden, die dazu vorgesehen ist, ein Bauteil, wie vorzugsweise die Türeinheit, zwischen zumindest zwei Stellungen beweglich zu lagern. Die Lagervorrichtung ist vorzugsweise insbesondere dazu vorgesehen, die Türeinheit zwischen einer maximal geschlossenen Stellung und einer maximal geöffneten Stellung beweglich zu lagern. Vorzugsweise ist die Lagervorrichtung dazu vorgesehen, die Türeinheit entlang einer Bewegungsbahn beweglich zu lagern, wobei die Bewegungsbahn vorzugsweise von einer geraden Bewegungsachse gebildet ist. Mittels der Lagervorrichtung ist die Türeinheit zwischen der geöffneten Stellung und der geschlossenen Stellung entlang der Bewegungsbahn axial verstellbar, vorzugsweise verschiebbar. Unter einer "maximal geöffneten Verstaustellung" soll vorzugsweise eine Stellung der Türeinheit verstanden werden, in der die Türeinheit vorzugsweise komplett aus dem Durchgangsbereich herausbewegt ist und den Durchgangsbereich dadurch komplett frei gibt. In der maximal geöffneten Stellung ist die Türeinheit vorzugsweise vollständig überlappend zu der Umhausungseinheit angeordnet. In der maximal geöffneten Stellung ist die Türeinheit von einem Gangbereich aus betrachtet vollständig hinter der Umhausungseinheit angeordnet. Es ist grundsätzlich denkbar, dass die Türeinheit in der maximal geöffneten Stellung in einem dafür vorgesehenen Innenraum der Umhausungseinheit angeordnet ist. Unter einer "geschlossenen Stellung" soll vorzugsweise eine Stellung der Türeinheit verstanden werden, in der die Türeinheit den Durchgangsbereich vollständig verschließt. In der geschlossenen Stellung erstreckt sich die Türeinheit vorzugsweise über die gesamte Strecke zwischen den Umhausungselementen der Umhausungseinheit, welche den Durchgangsbereich ausbilden. Unter einer "Verriegelungsvorrichtung" soll vorzugsweise eine Vorrichtung verstanden werden, die dazu vorgesehen ist, ein Element, wie vorzugsweise die Türeinheit, in zumindest einer Stellung, vorzugsweise in der maximal geöffneten Stellung, positionsfest zu verriegeln, also diese Stellung positionsfest zu fixieren. Vorzugsweise ist die Verriegelungsvorrichtung dazu vorgesehen, die Türeinheit form- und/oder kraftschlüssig zu verriegeln. Vorzugsweise weist die Verriegelungsvorrichtung wenigstens ein, besonders bevorzugst zwei, Verriegelungselement/e auf. Ein Verriegelungselement ist vorzugsweise dazu vorgesehen, in einer Verriegelstellung der Verriegelungsvorrichtung formschlüssig in ein äquivalent ausgebildetes Gegenstück einzugreifen. In der Verriegelstellung der Verriegelungsvorrichtung ist das Verriegelungselement vorzugsweise in einer Verriegelposition angeordnet. In einer Entriegelstellung der Verriegelungsvorrichtung ist das Verriegelungselement vorzugsweise in einer Entriegelposition angeordnet, in der das Verriegelungselement die Verriegelungsstellung nicht verriegelt. In der Entriegelposition steht das Verriegelungselement vorzugsweise nicht in einem formschlüssigen Kontakt mit dem entsprechenden Gegenstück, in das das Verriegelungselement zur formschlüssigen Verriegelung der Verriegelungsvorrichtung eingreift. Unter einer "Verriegelstellung der Verriegelungsvorrichtung" soll eine Stellung der Verriegelungsvorrichtung verstanden werden, in der die Türeinheit positionsfest verriegelbar ist. Vorzugsweise ist in der Verriegelstellung der Verriegelungsvorrichtung ein Verriegelungselement in einer Verriegelungsstellung angeordnet, in der das Verriegelungselement dazu vorgesehen ist, in das äquivalent ausgebildete Gegenstück einzugreifen. Vorzugsweise ist der zu verriegelnde Gegenstand, insbesondere der Türeinheit, lediglich in einer definierten Stellung, vorzugsweise der geschlossenen Stellung. Grundsätzlich ist es denkbar, dass die Türeinheit nicht verriegelt ist, wenn die Verriegelungsvorrichtung in ihrer Verriegelstellung ist, und zwar dann, wenn die Türeinheit nicht in ihrer geschlossenen Stellung angeordnet ist. Unter einer "Entriegelstellung der Verriegelungsvorrichtung" soll vorzugsweise eine Stellung der Verriegelungsvorrichtung verstanden werden, in der die Verriegelstellung dazu vorgesehen ist, eine Bewegung der Türeinheit freizugeben und diese nicht zu blockieren. In der Entriegelstellung ist die Türeinheit freigegeben und kann von der geöffneten Stellung in die geschlossene Stellung gebracht werden. Vorzugsweise kann die Türeinheit in der Entriegelstellung der Verriegelungsvorrichtung zwischen der geöffneten Stellung und der geschlossenen Stellung verstellt werden. Unter einer "elektrisch und/oder elektronisch ansteuerbaren Aktuatorvorrichtung" soll insbesondere eine Vorrichtung verstanden werden, die einen elektrischen oder elektronisch ansteuerbaren Aktuator aufweist, der bei einer elektrischen und/oder elektronischen Ansteuerung einen Betriebszustand ändert, wie beispielsweise eine Bewegung, vorzugsweise eine Axialbewegung, ausführt und/oder ein magnetisches Feld erzeugt. Unter einer "Verriegelungszustandsindikationseinheit" soll vorzugsweise eine Einheit verstanden werden, die einen Zustand einer Verriegelung der Verriegelungselemente, insbesondere eine unvollständige Verriegelung der Verriegelungselemente der Verriegelungsvorrichtung, erfasst und ein entsprechendes optisches, akustisches, optisches und/oder elektronisches Signal ausgibt, über das ein entsprechender Zustand, insbesondere eine unvollständige Verriegelung des Verriegelungselements indiziert, also angezeigt wird. Die Verriegelungszustandsindikationseinheit ist vorzugsweise dazu vorgesehen, anzuzeigen wenn eines der beiden Verriegelungselemente unvollständig verriegelt ist und die Türeinheit dadurch zwar teilweise verriegelt, aber nicht vorschriftsmäßig mit beiden Verriegelungselementen verriegelt ist. Unter einer "unvollständigen Verriegelung eines Verriegelungselements" soll insbesondere ein Zustand verstanden werden, in dem das Verriegelungselement nicht wie für die Verriegelstellung vorgesehen vollständig in ein entsprechendes Gegenstück formschlüssig eingreift. Bei einer unvollständigen Verriegelung eines Verriegelungselements greift das Verriegelungselement nicht formschlüssig in das dazu vorgesehene Gegenstück ein. Bei einer unvollständigen Verriegelung eines Verriegelungselements kann das Verriegelungselement die Türeinheit nicht in der Verriegelstellung halten. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft einfach eine nicht korrekte Verriegelung der Türeinheit ermittelt und angezeigt werden. Durch die erfindungsgemäße Ausgestaltung kann insbesondere erkannt werden, wenn eines von zumindest zwei Verriegelungselementen nicht korrekt verriegelt ist und dies angezeigt werden. Dadurch kann beispielsweise ein Bordpersonal oder ein Passagier einfach auf eine nicht korrekt verriegelte Türeinheit hingewiesen werden. Dadurch können vorzugsweise gefährliche Situationen durch nicht korrekt verriegelte Türeinheiten vermieden werden, wenn durch eine einfach durchzuführende Kontrolle, beispielsweise vor einer Landung des Flugzeugs, erkannt werden kann, ob eine Türeinheit korrekt verriegelt ist. Dadurch kann vorteilhaft insbesondere eine Sicherheit der Flugzeugsitzvorrichtung erhöht werden.

Weiter wird vorgeschlagen, dass die Verriegelungszustandsindikationseinheit eine Indikationseinheit aufweist, die eine unvollständige Verriegelung eines der beiden Verriegelungselemente anzeigt, getrennt von den Verriegelungselementen und vorzugsweise in einem oberen Bereich der Türeinheit angeordnet ist. Unter einer "Indikationseinheit" soll vorzugsweise eine Einheit verstanden werden, die ein optisches, akustisches und/oder haptisches Signal ausgeben kann, das von einer Person, beispielsweise von einem Bordpersonal erfasst werden kann. Unter "getrennt angeordnet" soll vorzugsweise verstanden werden, dass die entsprechenden Elemente, wie insbesondere die Indikationseinheit und die Verriegelungselemente, räumlich getrennt voneinander angeordnet sind und vorzugsweise keine direkte Verbindung miteinander aufweisen. Unter einem "oberen Bereich der Türeinheit" soll vorzugsweise ein oberes, einem Kabinenboden abgewandtes Drittel, besonders bevorzugt ein oberer Randbereich der Türeinheit, verstanden werden. Vorteilhaft ist die Indikationseinheit zwar in einem oberen Bereich der Türeinheit angeordnet, es ist aber grundsätzlich auch denkbar, dass die Indikationseinheit in einem anderen Bereich an der Türeinheit oder einer Umhausungseinheit angeordnet ist. Es ist grundsätzlich denkbar, dass die Indikationseinheit in einem kabinenbodennahen Bereich angeordnet ist, oder dass die Indikationseinheit in einem mittleren Bereich der Türeinheit oder der Umhausungseinheit angeordnet ist. Vorteilhaft ist die Indikationseinheit in einem von einer Person einfach einzusehenden Bereich angeordnet. Dadurch kann die Indikationseinheit vorteilhaft unabhängig von den Verriegelungselementen und besonders vorteilhaft in einem gut einzusehenden Bereich angeordnet werden, der leicht von einer Person gesehen werden kann.

Ferner wird vorgeschlagen, dass die Verriegelungszustandsindikationseinheit bei einer unvollständigen Verriegelung eines der Verriegelungselemente dazu vorgesehen ist, eine Verschiebung der verriegelten Türeinheit in Schließrichtung um eine Indikationslänge zuzulassen. Unter einer "Indikationslänge" soll vorzugsweise eine definierte Länge verstanden werden, um die die Türeinheit in Schließrichtung verschoben werden kann, damit eine unvollständige Verriegelung erkannt werden kann. Die Indikationslänge beträgt vorzugsweise weniger als 30 mm, vorzugsweise unter 20 mm und in einer besonders bevorzugten Ausgestaltung weniger als 10 mm. Bei einer rein elektronischen Erfassung der Indikationslänge, beispielsweise durch eine Sensorvorrichtung, ist eine Indikationslänge von unter 10 mm denkbar, beispielsweise 5 mm. Bei einer direkten rein optischen Erfassung der Indikationslänge durch eine Person beträgt die Indikationslänge vorzugsweise 25 mm (1 Zoll). Dadurch kann eine unvollständige Verriegelung besonders einfach indiziert werden.

Es wird weiterhin vorgeschlagen, dass die Verriegelungszustandsindikationseinheit zumindest ein Wippenelement aufweist, das dazu vorgesehen ist, die Verriegelungselemente in ihrer Verriegelposition zu kontaktieren. Unter einem "Wippenelement" soll vorzugsweise ein beweglich gelagertes Element verstanden werden, das um eine vorzugsweise im Wesentlichen mittig gelagerte Schwenkachse in zwei entgegengesetzte Drehrichtungen um einen definierten Schwenkwinkel verschwenkt werden kann. Das Wippenelement ist vorzugsweise dazu vorgesehen, eine Anlagefläche für die Verriegelungselemente bereitzustellen, an der die Verriegelungselemente anliegen. Das Wippenelement ist vorzugsweise dazu vorgesehen, von den vollständig verriegelten Verriegelungselementen in einer Neutralstellung gehalten zu werden. Dadurch kann die Verriegelungsindikationseinheit besonders einfach und vorteilhaft mechanisch ausgebildet werden.

Des Weiteren wird vorgeschlagen, dass das Wippenelement um eine Schwenkachse verschwenkbar gelagert ist, die koaxial zu Bewegungsachsen der Verriegelungselemente verläuft und einen gleichen Abstand zu den Bewegungsachsen der Verriegelungselemente aufweist. Dadurch kann das Wippenelement besonders vorteilhaft angebracht werden.

Weiterhin wird vorgeschlagen, dass das Wippenelement bei einer unvollständigen Verriegelung eines der Verriegelungselemente dazu vorgesehen ist, durch das andere Verriegelungselement verkippt zu werden und dadurch eine Verschiebung der verriegelten Türeinheit in Schließrichtung um eine Indikationslänge zuzulassen. Dadurch kann durch das Wippenelement besonders einfach eine unvollständige Verriegelung eines Verriegelungselements angezeigt werden.

Außerdem wird vorgeschlagen, dass die Verriegelungszustandsindikationseinheit zumindest eine Sensorvorrichtung umfasst, die dazu vorgesehen ist, eine unvollständige Verriegelung eines der Verriegelungselemente, insbesondere indirekt zu erfassen. Unter einer "Sensorvorrichtung" soll vorzugsweise eine Vorrichtung verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensorvorrichtungen denkbar, wie beispielsweise mechanische Sensoren (Schalter) oder REEd-Kontakte (Magnetschalter). Eine Sensorvorrichtung ist vorzugsweise dazu vorgesehen, ein elektrisches und/oder elektronisches Sensorsignal auszugeben, das vorzugsweise von einer entsprechenden Recheneinheit ausgewertet werden kann. Unter "indirekt erfassen" soll vorzugsweise verstanden werden, dass eine zu erfassende Kenngröße nicht direkt an dem zu erfassenden Element, wie insbesondere einem Verriegelungselement, erfasst wird, sondern an einem anderen Bauteil, wie insbesondere an der Türeinheit. Dadurch kann durch die Verriegelungszustandsindikationseinheit eine unvollständige Verriegelung eines Verriegelungselements besonders einfach erkannt werden.

Es wird weiter vorgeschlagen, dass die Sensorvorrichtung einstückig mit einer als Türpositionssensor ausgebildeten Sensorvorrichtung ausgebildet ist. Unter einem "Türpositionssensor" soll vorzugsweise ein Sensor verstanden werden, der dazu vorgesehen ist, eine Position der Türeinheit, zu erfassen. Vorzugsweise ist der Türpositionssensor dazu vorgesehen, eine geöffnete Stellung der Türeinheit, insbesondere eine vollständige geöffnete Stellung der Türeinheit, zu erfassen.

Grundsätzlich wäre es auch denkbar, dass der Türpositionssensor eine genaue Position zwischen der geöffneten und der geschlossenen Stellung der Türeinheit erfassen kann. Dadurch kann vorteilhaft ein vorhandener Sensor, insbesondere der Türpositionssensor als Sensoreinheit zur indirekten Erfassung einer unvollständigen Verriegelung verwendet werden. Dadurch können vorteilhaft insbesondere Bauteilkosten verringert werden.

Zudem wird vorgeschlagen, dass die Indikationseinheit zumindest teilweise von der Türeinheit ausgebildet ist. Dadurch kann die Indikationseinheit besonders einfach und kostengünstig ausgebildet werden.

Weiter wird vorgeschlagen, dass die Verriegelungszustandsindikationseinheit je Verriegelungselement ein federbelastetes Indikationselement aufweist, die dazu vorgesehen sind, bei einer Verriegelung der Türeinheit durch das jeweilige Verriegelungselement in seiner Verriegelstellung aus einer ersten Stellung in eine zweite Stellung ausgelenkt zu werden. Unter einem "federbelasteten Indikationselement" soll vorzugsweise ein Indikationselement verstanden werden, das durch eine Federkraft in eine erste Anzeigeposition gedrückt wird und durch eine einwirkende Aktuationskraft, vorzugsweise eine durch ein Verriegelungselement einwirkende Kraft entgegen der Federkraft in eine zweite Anzeigeposition gebracht werden kann. Nach Wegfall der Aktuationskraft wird das federbelastete Indikationselement durch die Federkraft selbsttätig in die erste Anzeigeposition zurückgestellt. Dadurch kann eine alternative Indikationseinheit für die Verriegelungszustandsindikationseinheit bereitgestellt werden.

Ferner wird vorgeschlagen, dass die Verriegelungszustandsindikationseinheit je federbelastetem Indikationselement ein Sichtfenster aufweist, durch das eine Stellung des jeweiligen Indikationselements einsehbar ist. Dadurch kann eine Stellung der Indikationselemente besonders einfach von einer Person gesehen werden.

Des Weiteren wird vorgeschlagen, dass die Verriegelungszustandsindikationseinheit rein mechanisch ausgebildet ist. Darunter, dass die "Verriegelungszustandsindikationseinheit rein mechanisch ausgebildet ist" soll vorzugsweise verstanden werden, dass die Verriegelungszustandsindikationseinheit lediglich aus mechanischen Bauteilen aufgebaut ist und insbesondere keine elektrischen oder elektronischen Bauteile aufweist. Dadurch kann die Verriegelungszustandsindikationseinheit besonders kostengünstig ausgebildet werden.

Das erfindungsgemäße Flugzeugsitzmodul soll hierbei nicht auf die oben beschriebene Anwendung und Ausführungsform beschränkt sein. Insbesondere kann das erfindungsgemäße Flugzeugsitzmodul zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisierte Ansicht eines Flugzeugsitzmoduls, mit einer Umhausungseinheit und einer Türeinheit,
- Fig. 2: eine schematisierte Ansicht einer Türeinheit mit einer Verriegelungsvorrichtung,
- Fig. 3: eine schematische Ansicht der Verriegelungsvorrichtung mit zwei Verriegelungselementen in ihrer Verriegelstellung und einer Verriegelungszustandsindikationseinheit,
- Fig. 4: eine schematische Darstellung der Verriegelungsvorrichtung und der Verriegelungszustandsindikationseinheit mit einem Verriegelungselement, das nicht vollständig verriegelt ist,
- Fig. 5: eine weitere schematische Darstellung der Verriegelungsvorrichtung und der Verriegelungszustandsindikationseinheit mit einem Verriegelungselement, das nicht vollständig verriegelt ist,
- Fig. 6: eine schematische Darstellung der Türeinheit mit einer Sensorvorrichtung die als ein Türsensor ausgebildet ist,
- Fig. 7: eine schematische Darstellung einer Verriegelungszustandsindikationseinheit in einem zweiten Ausführungsbeispiel, die rein mechanisch ausgebildet ist, und
- Fig. 8: eine weitere Ansicht der Türeinheit mit einer Verriegelungszustandsindikationseinheit in dem zweiten Ausführungsbeispiel.

### Beschreibung der Ausführungsbeispiele

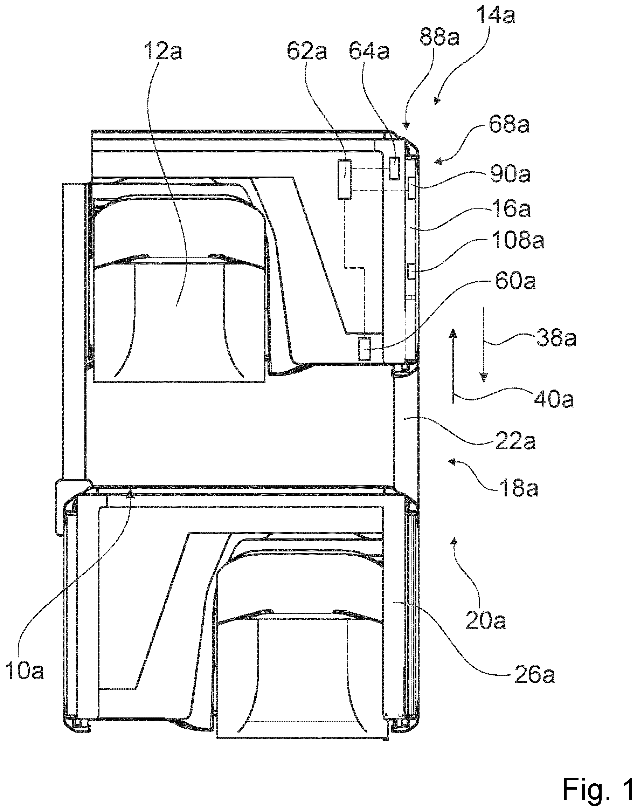

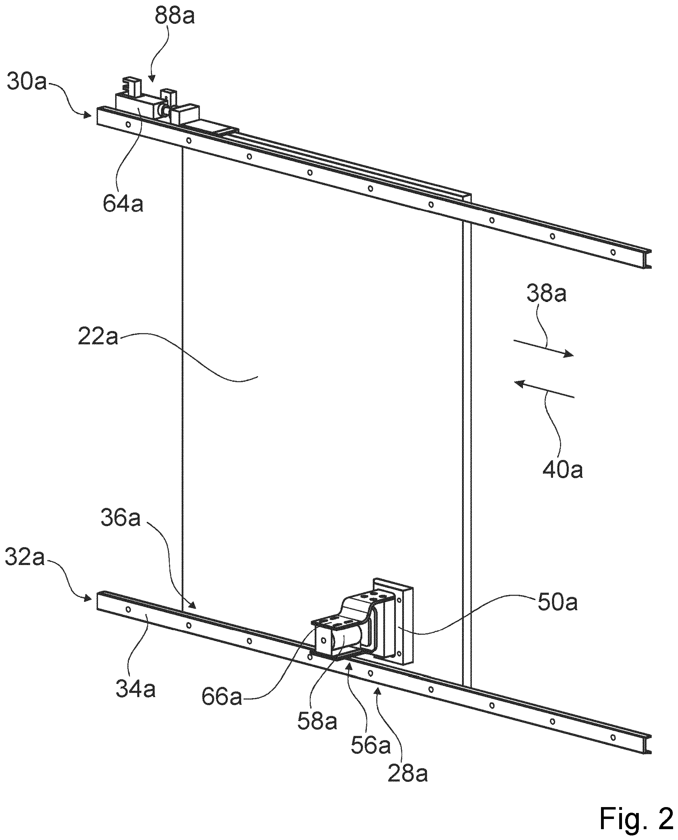

In den Figuren 1 bis 6 ist ein Flugzeugsitzmodul gezeigt. Das Flugzeugsitzmodul ist als ein Teil einer Innenausstattung einer Flugzeugkabine ausgebildet. In einer Flugzeugkabine sind vorzugsweise mehrere Flugzeugsitzmodule angeordnet. Das Flugzeugsitzmodul bildet einen Fluggastsitzbereich 10a aus. Der Fluggastsitzbereich 10a ist als ein Bereich ausgebildet, den insbesondere ein Passagier während eines Fluges für sich zur Verfügung hat. Der Fluggastsitzbereich 10a ist vorzugsweise insbesondere als ein Businessclass- oder Firstclass-Fluggastsitzbereich ausgebildet. Die Flugzeugkabine weist zumindest einen Gangbereich 20a auf. Über den Gangbereich 20a ist der Fluggastsitzbereich 10a insbesondere für einen Passagier erreichbar. Das Flugzeugsitzmodul umfasst einen Flugzeugsitz 12a, der in dem Fluggastsitzbereich 10a angeordnet ist. Der Flugzeugsitz 12a ist vorzugsweise insbesondere als ein Flugzeugsitz 12a ausgebildet, der von zumindest einer Sitzposition in eine Liegeposition verstellbar ist. Das Flugzeugsitzmodul weist eine Umhausungseinheit 14a auf. Die Umhausungseinheit 14a ist dazu vorgesehen, den Fluggastsitzbereich 10a zumindest teilweise von einem Rest der Flugzeugkabine abzutrennen. Die Umhausungseinheit 14a ist dazu vorgesehen, den Fluggastsitzbereich 10a zumindest im Wesentlichen zu umgeben. Die Umhausungseinheit 14a ist insbesondere dazu vorgesehen, den Fluggastsitzbereich 10a räumlich von einem Rest der Flugzeugkabine, insbesondere einem Kabinengang, abzutrennen, um insbesondere eine erhöhte Privatsphäre für einen Passagier in dem Fluggastsitzbereich 10a zu schaffen. Die Umhausungseinheit 14a weist ein Umhausungselement 16a auf. Das Umhausungselement 16a umgibt den Fluggastsitzbereich 10a zumindest teilweise. Das Umhausungselement 16a kann grundsätzlich alleine oder zusammen mit einer Umhausungseinheit 14a eines anderen Flugzeugsitzmoduls den Fluggastsitzbereich 10a abtrennen. Die Umhausungseinheit 14a bildet einen Durchgangsbereich 18a aus. Der Durchgangsbereich 18a verbindet den Fluggastsitzbereich 10a und den angrenzenden Gangbereich 20a der Flugzeugkabine. Durch den Durchgangsbereich 18a kann eine Person, insbesondere ein Passagier, von dem Gangbereich 20a in den Fluggastsitzbereich 10a gelangen und umgekehrt. Der Durchgangsbereich 18a weist vorzugsweise eine Breite von 38 cm auf.

Das Flugzeugsitzmodul umfasst eine Türeinheit 22a. Die Türeinheit 22a ist dazu vorgesehen, zumindest in einem Betriebszustand den Fluggastsitzbereich 10a zumindest teilweise von einem angrenzenden Kabinenbereich, insbesondere dem Gangbereich 20a, abzugrenzen. Die Türeinheit 22a ist dazu vorgesehen, den Durchgangsbereich 18a in einer geschlossenen Stellung zu verschließen. In einer voll geschlossenen Stellung versperrt die Türeinheit 22a den Durchgangsbereich 18a komplett. Dabei ist es insbesondere denkbar, dass insbesondere in einem unteren Bereich eine Lücke zwischen der Türeinheit 22a und dem Kabinenboden vorhanden bleibt. In der voll geschlossenen Stellung erstreckt sich die Türeinheit 22a zumindest in einem Teilbereich vollständig zwischen dem Umhausungselement 16a und einem weiteren Umhausungselement 26a, die den Durchgangsbereich 18a begrenzen. Das weitere Umhausungselement 26a kann insbesondere ein Umhausungselement einer weiteren, vor der Umhausungseinheit 14a angeordneten weiteren Umhausungseinheit sein, die einen weiteren Flugzeugsitz umhaust. In einer geöffneten Stellung ist die Türeinheit 22a dazu vorgesehen, den Durchgangsbereich 18a freizugeben. In der geöffneten Stellung ist die Türeinheit 22a vorzugsweise komplett aus dem Durchgangsbereich 18a herausbewegt. Die Türeinheit 22a ist an der Umhausungseinheit 14a, insbesondere an dem Umhausungselement 16a, angebunden. Grundsätzlich wäre es ebenso denkbar, dass die Türeinheit 22a an dem weiteren Umhausungselement 26a der vorderen Umhausungseinheit angebunden ist.

Das Flugzeugsitzmodul weist zur Lagerung der Türeinheit 22a eine Lagervorrichtung 24a auf. Die Lagervorrichtung 24a ist dazu vorgesehen, die Türeinheit 22a beweglich an der Umhausungseinheit 14a zu lagern. Die Türeinheit 22a ist über die Lagervorrichtung 24a an das Umhausungselement 16a angebunden. Mittels der Lagervorrichtung 24a ist die Türeinheit 22a zwischen der geöffneten Stellung und der geschlossenen Stellung verstellbar. Die Lagervorrichtung 24a ist vorzugsweise als eine Linearlagervorrichtung ausgebildet. Mittels der als Linearlagervorrichtung ausgebildeten Lagervorrichtung 24a ist die Türeinheit 22a linear zwischen einer geschlossenen Stellung und einer geöffneten Stellung verschiebbar. Mittels der Lagervorrichtung 24a ist die Türeinheit 22a in einer Schließrichtung 38a und in einer Öffnungsrichtung 40a bewegbar. Die Schließrichtung 38a und die Öffnungsrichtung 40a sind einander entgegengesetzte Richtungen der Bewegungsbahn, entlang der die Türeinheit 22a mittels der Lagervorrichtung 24a verschiebbar ist. Die Schließrichtung 38a ist ausgehend von der geöffneten Stellung der Türeinheit 22a parallel zu der Bewegungsbahn in Richtung der geschlossenen Stellung ausgerichtet. Die Schließrichtung 38a ist parallel zu der Bewegungsbahn von dem Umhausungselement 16a weggerichtet. Die Öffnungsrichtung 40a ist von der geschlossenen Stellung der Türeinheit 22a parallel zu der Bewegungsbahn in Richtung der geöffneten Stellung der Türeinheit 22a ausgerichtet. Die Öffnungsrichtung 40a ist parallel zu der Bewegungsbahn in Richtung des Umhausungselements 16a ausgerichtet.

Die Lagervorrichtung 24a umfasst vorzugsweise zwei Lagermodule 30a, 32a. Die Lagervorrichtung 24a weist das erste Lagermodul 30a und das zweite Lagermodul 32a auf. Das erste Lagermodul 30a ist dazu vorgesehen, die Türeinheit 22a in einem oberen Bereich zu lagern. Das erste Lagermodul 30a ist insbesondere in einem oberen Bereich der Türeinheit 22a angeordnet. Das zweite Lagermodul 32a ist dazu vorgesehen, die Türeinheit 22a in einem unteren Bereich zu lagern. Das zweite Lagermodul 32a ist in einem unteren Bereich der Türeinheit 22a angeordnet. Durch die zwei Lagermodule 30a, 32a, die an zwei gegenüberliegenden Bereichen der Türeinheit 22a angeordnet sind, kann eine besonders gleichmäßige Lagerung der Türeinheit 22a erreicht werden. Die Lagermodule 30a, 32a weisen vorzugsweise jeweils ein erstes, als Linearlagerschiene ausgebildetes Lagerelement 34a und ein darin axial verschiebbar gelagert angeordnetes zweites Lagerelement 36a auf. Beispielsweise ist denkbar, dass das erste als Linearlagerschiene ausgebildete Lagerelement 34a fest mit der Umhausungseinheit 14a und das zweite Lagerelement 36a fest mit der Türeinheit 22a verbunden ist. Grundsätzlich ist es auch denkbar, dass die beiden Lagerelemente 34a, 36a jeweils genau anders herum angebunden sind.

Das Flugzeugsitzmodul umfasst eine Verriegelungsvorrichtung 28a. Die Verriegelungsvorrichtung 28a ist dazu vorgesehen, die Türeinheit 22a in der geöffneten Stellung zu verriegeln. Die Verriegelungsvorrichtung 28a ist dazu vorgesehen, die Türeinheit 22a in der maximal geöffneten Verstaustellung zu verriegeln. Unter der geöffneten Stellung, in der die Verriegelungsvorrichtung 28a die Türeinheit 22a verriegeln kann, ist vorzugsweise eine vollständig geöffnete Stellung zu verstehen. Vorzugsweise sind eine geöffnete Stellung und eine vollständig geöffnete Stellung identisch. Im Unterschied zu der geöffneten Stellung gibt es eine teilweise geöffnete Stellung und die geschlossene Stellung der Türeinheit 22a. Die Verriegelungsvorrichtung 28a ist dazu vorgesehen, die Türeinheit 22a in einer Verriegelstellung zu verriegeln und in einer Entriegelstellung eine Bewegung der Türeinheit 22a entlang der Bewegungsbahn der Türeinheit 22a freizugeben. Durch die Verriegelung der Türeinheit 22a in der geöffneten Stellung ist die Türeinheit 22a vorteilhaft gesichert und der Durchgangsbereich 18a ist freigegeben.

Die Verriegelungsvorrichtung 28a umfasst eine elektrisch und/oder elektronisch ansteuerbare Aktuatorvorrichtung 56a. Die Aktuatorvorrichtung 56a umfasst ein erstes Verriegelungselement 42a. Die Aktuatorvorrichtung 56a umfasst ein zweites Verriegelungselement 44a. Durch das zweite Verriegelungselement 44a kann vorteilhaft eine Redundanz erreicht werden, wodurch die Verriegelungsvorrichtung 28a bei einem Ausfall eines der Verriegelungselemente 42a, 44a immer noch einsatzfähig bleibt. Die Verriegelungselemente 42a, 44a sind als Verriegelungsstifte ausgebildet. Die als Verriegelungsstifte ausgebildeten Verriegelungselemente 42a, 44a weisen vorzugsweise einen kreisrunden Querschnitt auf. Grundsätzlich wäre es auch denkbar, dass die Verriegelungselemente 42a, 44a einen ovalen oder rechteckigen Querschnitt aufweisen. Die Verriegelungselemente 42a, 44a sind im Wesentlichen identisch ausgebildet. Die Verriegelungselemente 42a, 44a sind zwischen einer Verriegelposition und einer Entriegelposition verstellbar. Die Verriegelungselemente 42a, 44a sind entlang einer Bewegungsachse zwischen ihrer Verriegelposition und ihrer Entriegelposition linear verschiebbar. Die Aktuatorvorrichtung 56a weist einen Grundkörper 66a auf. Die Verriegelungselemente 42a, 44a sind beweglich in dem Grundkörper 66a gelagert. Die Verriegelungselemente 42a, 44a sind axial verschiebbar in dem Grundkörper 66a gelagert. Die Verriegelungselemente 42a, 44a sind zur Verstellung zwischen der Verriegelungsposition und der Entriegelposition axial verschiebbar. Die Verriegelungselemente 42a, 44a sind vorzugsweise federbelastet ausgebildet. Die Aktuatorvorrichtung 56a weist je Verriegelungselement 42a, 44a ein Federelement auf, das die Verriegelungselemente 42a, 44a jeweils in eine Richtung mit einer Federkraft beaufschlagt. Grundsätzlich wäre es auch denkbar, dass die Aktuatorvorrichtung 56a ein gemeinsames Federelement für beide Verriegelungselemente 42a, 44a aufweist. Die Verriegelungselemente 42a, 44a sind in Richtung ihrer Verriegelposition mit der Federkraft beaufschlagt. Die Verriegelungselemente 42a, 44a sind mittels der Federelemente so ausgebildet, dass ihre Verriegelposition eine Neutralstellung ausbildet, in die die Verriegelungselemente 42a, 44a automatisch verstellt werden. Die beiden Verriegelungselemente 42a, 44a sind nebeneinander angeordnet. Die Verriegelungselemente 42a, 44a sind beabstandet zueinander angeordnet. Insbesondere sind die Verriegelungselemente 42a, 44a in der Schließrichtung 38a bzw. Öffnungsrichtung 40a zueinander beabstandet angeordnet. Die Verriegelungselemente 42a, 44a sind in parallel zu der Bewegungsbahn, entlang der die Türeinheit 22a mittels der Lagervorrichtung 24a verschiebbar ist, beabstandet angeordnet. Die Verriegelungselemente 42a, 44a sind in einer Horizontalrichtung nebeneinander angeordnet. Grundsätzlich wäre es auch denkbar, dass die Verriegelungselemente 42a, 44a in einer Vertikalrichtung nebeneinander, also übereinander angeordnet sind. Die Verriegelungselemente 42a, 44a sind jeweils in einer Führungsausnehmung linear verschiebbar gelagert. Die Führungsausnehmungen sind vorzugsweise in dem Grundkörper 66a der Aktuatorvorrichtung 56a angeordnet. Die Verriegelungselemente 42a, 44a sind zur Verriegelung der Türeinheit 22a dazu vorgesehen, in der Verriegelstellung in ein Gegenstück formschlüssig einzugreifen.

Die Verriegelungsvorrichtung 28a umfasst je Verriegelungselement 42a, 44a ein Formschlusselement 46a, 48a, in das das entsprechende Verriegelungselement 42a, 44a zur Verriegelung formschlüssig eingreift. Die Formschlusselemente 46a, 48a sind als Ausnehmungen ausgebildet. Die als Ausnehmungen ausgebildeten Formschlusselemente 46a, 48a weisen eine Erstreckung auf, die größer ist als die darin eingreifenden Verriegelungselemente 42a, 44a. Die Formschlusselemente 46a, 48a weisen insbesondere in Bewegungsrichtung der Türeinheit 22a eine Erstreckung auf, die größer ist als eine entsprechende Erstreckung der Verriegelungselemente 42a, 44a. Dadurch hat ein entsprechendes in das Formschlusselement 46a, 48a eingreifendes Verriegelungselement 42a, 44a einen definierten Bewegungsfreiraum in dem Formschlusselement 46a, 48a. Die Verriegelungsvorrichtung 28a umfasst einen Verriegelungsgrundkörper 50a. Die Formschlusselemente 46a, 48a sind in den Verriegelungsgrundkörper 50a eingebracht. Die Formschlusselemente 46a, 48a sind in eine Oberseite des Verriegelungsgrundkörpers 50a eingebracht. Vorzugsweise sind die beiden Formschlusselemente 46a, 48a gemeinsam ausgebildet. Die beiden Formschlusselemente 46a, 48a sind als eine gemeinsame Ausnehmung 52a ausgebildet. Durch eine gemeinsame Ausbildung der Formschlusselemente 46a, 48a durch die gemeinsame Ausnehmung 52a kann der Verriegelungsgrundkörper 50a besonders einfach ausgebildet werden. Der Verriegelungsgrundkörper 50a ist vorzugsweise aus einem Metall gebildet. Der Verriegelungsgrundkörper 50a ist als ein separates Bauteil ausgebildet. Der Verriegelungsgrundkörper 50a ist vorzugsweise dazu vorgesehen, in einem Montageschritt fest an einem Bauteil des Flugzeugsitzmoduls, vorzugsweise der Türeinheit 22a oder der Umhausungseinheit 14a, montiert zu werden. In dem gezeigten Ausführungsbeispiel ist der Verriegelungsgrundkörper 50a vorzugsweise fest mit der Türeinheit 22a verbunden. Der Verriegelungsgrundkörper 50a ist an einer Innenseite der Türeinheit 22a angebunden. Der Verriegelungsgrundkörper 50a ist vorzugsweise mit der Türeinheit 22a verschraubt. Grundsätzlich wäre es ebenso denkbar, dass der Verriegelungsgrundkörper 50a einstückig mit der Türeinheit 22a ausgebildet ist. Der Verriegelungsgrundkörper 50a bildet eine gegenüber der Innenseite der Türeinheit 22a erhöhte Oberfläche aus.

Die elektrisch und/oder elektronisch ansteuerbare Aktuatorvorrichtung 56a ist dazu vorgesehen, zur Entriegelung der Türeinheit 22a elektrisch und/oder elektronisch angesteuert zu werden. Durch die Aktuatorvorrichtung 56a sind die federbelasteten Verriegelungselemente 42a, 44a aktiv in ihre Entriegelposition verstellbar. Die Aktuatorvorrichtung 56a umfasst einen Aktuator 58a. Der Aktuator 58a ist als ein elektromechanischer Aktuator ausgebildet. Vorzugsweise ist der Aktuator 58a als ein elektromagnetischer Aktuator ausgebildet. Das Betätigungselement des Aktuators 58a ist mit den beiden Verriegelungselementen 42a, 44a gekoppelt. Durch Betätigung des Aktuators 58a können die beiden Verriegelungselemente 42a, 44a verstellt werden. Die beiden Verriegelungselemente 42a, 44a können durch eine Betätigung des Aktuators 58a von ihrer Verriegelstellung in ihre Entriegelstellung verstellt werden. In einem nicht betätigten Zustand des Aktuators 58a ist das Betätigungselement des Aktuators 58a in einer Neutralposition angeordnet. Grundsätzlich ist es denkbar, dass die Aktuatorvorrichtung 56a zwei separate Aktuatoren 58a aufweist, die jeweils mit einem der Verriegelungselemente 42a, 44a gekoppelt sind und dieses verstellen. Die elektrisch und/oder elektronisch ansteuerbare Aktuatorvorrichtung 56a ist an der Umhausungseinheit 14a angebunden. Vorzugsweise ist die elektrisch und/oder elektronisch ansteuerbare Aktuatorvorrichtung 56a an dem Umhausungselement 16a angebunden.

Die Verriegelungsvorrichtung 28a umfasst einen Betätigungsschalter 60a. Der Betätigungsschalter 60a ist dazu vorgesehen, ein Auslösesignal auszugeben, das dazu vorgesehen ist, die Aktuatorvorrichtung 56a anzusteuern. Mittels des Betätigungsschalters 60a kann die Aktuatorvorrichtung 56a betätigt und damit in einen aktivierten Zustand geschaltet werden. Vorzugsweise weist das Flugzeugsitzmodul ein Steuergerät 62a auf. Das Steuergerät 62a ist vorzugsweise als ein Flugzeugsitzsteuergerät ausgebildet. Das Auslösesignal des Betätigungsschalters 60a wird vorzugsweise von dem Steuergerät 62a ausgewertet und die Aktuatorvorrichtung 56a entsprechend angesteuert.

Das Flugzeugsitzmodul umfasst eine Sensorvorrichtung 64a, die zumindest zur Erfassung der Türeinheit 22a in der geöffneten Stellung vorgesehen ist. Die Sensorvorrichtung 64a ist als ein Türpositionssensor ausgebildet. Die Sensorvorrichtung 64a ist dazu vorgesehen, zu erkennen, wenn die Türeinheit 22a in ihrer geöffneten Stellung angeordnet ist und entsprechend mit der Verriegelungsvorrichtung 28a verriegelbar ist. Die Sensorvorrichtung 64a kann dabei vorzugsweise auch als ein Tastelement ausgebildet sein, das in der geöffneten Stellung der Türeinheit 22a durch einen entsprechenden Anschlag betätigt wird. Grundsätzlich ist es auch denkbar, dass die Sensorvorrichtung 64a als eine kontaktlose Sensorvorrichtung ausgebildet ist.

Das Flugzeugsitzmodul umfasst eine Federvorrichtung 68a, die dazu vorgesehen ist, die Türeinheit 22a mit einer Federkraft zu beaufschlagen. Die Federvorrichtung 68a umfasst zwei Federelemente 70a, 72a. Grundsätzlich ist auch nur ein Federelement 70a, 72a denkbar. Die Federvorrichtung 68a ist funktionell zwischen der Türeinheit 22a und der Umhausungseinheit 14a angeordnet. Die Federvorrichtung 68a ist dazu vorgesehen, eine in Schließrichtung wirkende Federkraft auf die Türeinheit 22a auszuüben. Die Federvorrichtung 68a ist dazu vorgesehen, in einer geöffneten Stellung der Türeinheit 22a eine Federkraft auf die Türeinheit 22a auszuüben, um eine Schließbewegung der Türeinheit 22a zu unterstützen. Bei einer Verschiebung der Türeinheit 22a aus der geschlossenen Stellung in Öffnungsrichtung 40a, um die Verriegelungsvorrichtung 28a mittels des Betätigungsschalters 60a zu entriegeln, wird die Federvorrichtung 68a gestaucht. Dadurch kann durch die Verschiebung der Türeinheit 22a in Öffnungsrichtung 40a vorteilhaft eine Federkraft erhöht werden, durch die eine Schließbewegung der Türeinheit 22a vorteilhaft unterstützt wird.

Die Verriegelungsvorrichtung umfasst eine Verriegelungszustandsindikationseinheit 74a. Die Verriegelungszustandsindikationseinheit 74a ist dazu vorgesehen, zumindest in der maximal geöffneten Stellung der Türeinheit 22a eine unvollständige Verriegelung zumindest eines der beiden Verriegelungselemente 42a, 44a zu erfassen und anzuzeigen. Die Verriegelungszustandsindikationseinheit 74a ist dazu vorgesehen, eine unvollständige Verriegelung der Verriegelungsvorrichtung 28a zu erfassen und anzuzeigen, wenn zumindest eines der beiden Verriegelungselemente unvollständig verriegelt ist. Die Verriegelungszustandsindikationseinheit 74a ist dazu vorgesehen, eine unvollständige Verriegelung der Verriegelungsvorrichtung 28a zu erfassen und anzuzeigen, wenn lediglich eines der Verriegelungselemente 42a, 44a unvollständig verriegelt ist. Durch die Erkennung einer unvollständigen Verriegelung eines der Verriegelungselemente 42a, 44a kann vorteilhaft früh erkannt werden, wenn eines der Verriegelungselemente 42a, 44a defekt ist und nicht mehr korrekt verriegelt werden kann, obwohl die Türeinheit 22a durch ein korrekt verriegeltes Verriegelungselement 42a, 44a in der geöffneten Stellung verriegelt ist. Dadurch kann eine Reparatur oder ein Austausch des einen Verriegelungselements 42a, 44a vorteilhaft früh veranlasst werden, sodass der Ausfall des anderen Verriegelungselements 42a, 44a und damit der dadurch resultierende zeitgleiche Defekt beider Verriegelungselemente 42a, 44a vorteilhaft vermieden werden kann.

Die Verriegelungszustandsindikationseinheit 74a ist dazu vorgesehen, eine unvollständige Verriegelung eines der Verriegelungselemente 42a, 44a indirekt zu erfassen und anzuzeigen. Die Verriegelungszustandsindikationseinheit 74a ist dazu vorgesehen, bei einer unvollständigen Verriegelung eines der Verriegelungselemente 42a, 44a eine Verschiebung der verriegelten Türeinheit 22a in Schließrichtung 38a um eine Indikationslänge 76a zuzulassen. Die Türeinheit 22a ist dabei um die Indikationslänge 76a verschiebbar, obwohl sie durch eines der Verriegelungselemente 42a, 44a verriegelt ist. Bei einer unvollständigen Verriegelung der Türeinheit 22a durch die Verriegelungsvorrichtung 28a, also wenn eines der beiden Verriegelungselemente 42a, 44a unvollständig verriegelt ist, ist die Türeinheit 22a um die Indikationslänge 76a in Schließrichtung 38a verschiebbar. Bei einer vollständigen Verriegelung der Türeinheit 22a mittels der Verriegelungsvorrichtung 28a, also wenn beide Verriegelungselemente 42a, 44a vollständig verriegelt sind, ist die Türeinheit 22a nicht in Schließrichtung 38a verschiebbar. Die Verschiebung der Türeinheit 22a in Schließrichtung 38a um die Indikationslänge 76a wird bei einer unvollständigen Verriegelung der Verriegelungsvorrichtung 28a durch die Federkraft der Federvorrichtung 68a indiziert. Die Federvorrichtung 68a drückt die Türeinheit 22a um die Indikationslänge 76a in die Schließrichtung 38a, wenn die Verriegelungsvorrichtung 28a durch die unvollständige Verriegelung eines Verriegelungselements 42a, 44a nicht richtig verriegelt ist. Die Indikationslänge 76a, um die die Türeinheit 22a zur Erkennung einer unvollständigen Verriegelung verschoben wird, beträgt vorzugsweise 5 mm. Grundsätzlich ist es auch denkbar, dass die Indikationslänge 76a einen Wert zwischen 20 mm und 1 mm, beispielsweise 15mm, 10mm, 3mm oder 1,5mm beträgt.

Die Verriegelungszustandsindikationseinheit 74a umfasst ein Wippenelement 78a. Das Wippenelement 78a ist dazu vorgesehen, die Verriegelungselemente 42a, 44a in ihrer Verriegelposition zu kontaktieren. In einem verriegelten Zustand der Türeinheit 22a in ihrer geöffneten Stellung liegen die Verriegelungselemente 42a, 44a in einem vollständig verriegelten Zustand an dem Wippenelement 78a an. Durch ein Anliegen beider Verriegelungselemente 42a, 44a in dem vollständig verriegelten Zustand wird das Wippenelement 78a in einer unausgelenkten Neutralstellung gehalten. Das Wippenelement 78a ist schwenkbar zu dem Verriegelungsgrundkörper 50a angeordnet.

Zur Anbringung des Wippenelements 78a weist die Verriegelungszustandsindikationseinheit 74a einen Anbindungsrahmen 80a auf. Der Anbindungsrahmen 80a ist an dem Verriegelungsgrundkörper 50a angebunden. Grundsätzlich wäre es auch denkbar, dass der Anbindungsrahmen 80a einstückig mit dem Verriegelungsgrundkörper 50a ausgebildet ist. Der Anbindungsrahmen 80a ist auf einer der Aktuatorvorrichtung 56a zugewandten Seite des Verriegelungsgrundkörpers 50a angeordnet. Der Anbindungsrahmen 80a weist eine Durchgangsöffnung 82a auf, die größer ist als die Ausnehmung 52a in dem Verriegelungsgrundkörper 50a, welche die Formschlusselemente 46a, 48a ausbildet. Die Durchgangsöffnung 80a lässt einen Zugang zu den von der Ausnehmung 52a gebildeten Formschlusselementen 46a, 48a zu. Die Verriegelungselemente 42a, 44a erstrecken sich in einem vollständig verriegelten Zustand durch die Durchgangsöffnung 82a des Anbindungsrahmens 80a in die von der Ausnehmung 52a gebildeten Formschlusselemente 42a, 44a. Das Wippenelement 78a ist mit dem Anbindungsrahmen 80a verbunden. Das Wippenelement 78a ist schwenkbar mit dem Anbindungsrahmen 80a verbunden. Das Wippenelement 78a ist um eine Schwenkachse verschwenkbar an dem Anbindungsrahmen 80a gelagert. Die Schwenkachse, um die das Wippenelement 78a gelagert ist, verläuft koaxial zu den Bewegungsachsen der Verriegelungselemente 42a, 44a. Die Schwenkachse weist senkrecht gemessen einen gleichen Abstand zu den Bewegungsachsen der Verriegelungselemente 42a, 44a auf. Die Schwenkachse ist vorzugsweise mittig zwischen den von der Ausnehmung 52a ausgebildeten Formschlusselementen 46a, 48a angeordnet. Das Wippenelement 78a ist vorzugsweise auf einer Mittelachse der Ausnehmung 52a angebracht. Das Wippenelement 78a ist über einen Lagerbolzen 84a verschwenkbar mit dem Anbindungsrahmen 80a verbunden. Der Lagerbolzen 84a bildet die Schwenkachse aus.

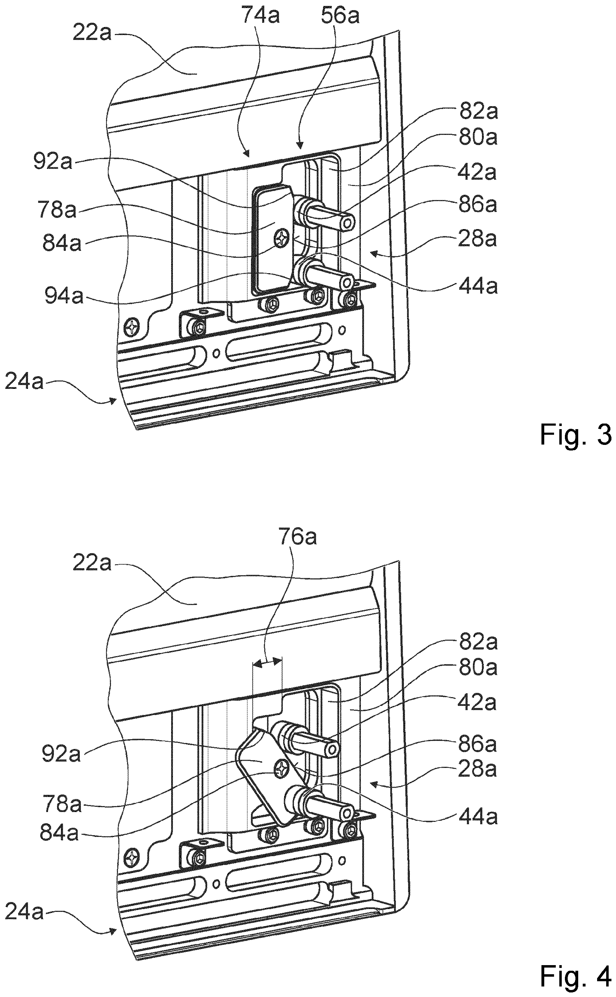

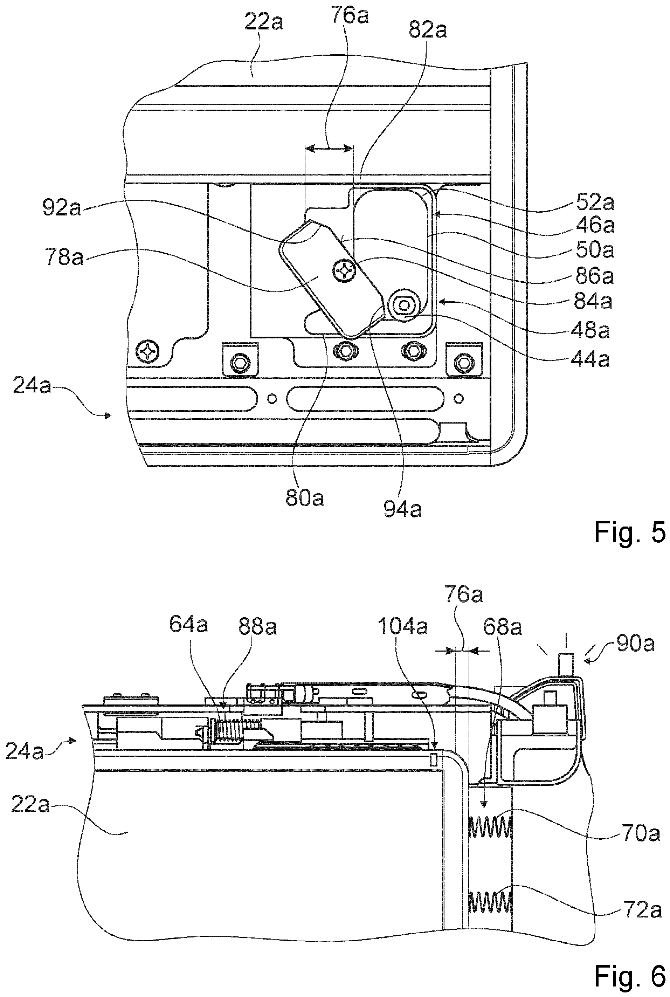

Das Wippenelement 78a ist als eine flache Platte ausgebildet. Das Wippenelement 78a weist eine Anlageseite 86a auf. Die Anlageseite 86a des Wippenelements 78a ist in einem montierten Zustand der Ausnehmung 52a zugewandt, welche die Formschlusselemente 46a, 48a ausbildet. Die Anlageseite 86a ist in der Neutralstellung parallel zu einer ersten Seite der Ausnehmung 52a ausgerichtet. In ihrer vollständig verriegelten Stellung liegen die Verriegelungselemente 42a, 44a an der Anlageseite 86a an dem Wippenelement 78a an. In einer Stellung, in der die Verriegelungselemente 42a, 44a in die Formschlusselemente 46a, 48a eingreifen, begrenzt die Anlageseite 86a des Wippenelements 78a eine Bewegung der Türeinheit 22a in Schließrichtung. Die Verriegelungselemente 42a, 44a stützen sich in der vollständig verriegelten Stellung über die Anlageseite 86a an dem Wippenelement 78a ab. Das Wippenelement 78a bildet ein Formschlusselement der Verriegelungsvorrichtung 28a für die Verriegelungselemente 42a, 44a aus. In einem vollständig verriegelten Zustand der Verriegelungsvorrichtung 28a, in dem beide Verriegelungselemente 42a, 44a vollständig verriegelt sind, bildet das Wippenelement 78a ein gemeinsames Formschlusselement für die Verriegelungselenente 42a, 44a aus (Siehe Figur 3). Das Wippenelement 78a ist dabei in seiner Neutralstellung, wenn beide Verriegelungselemente 42a, 44a vollständig verriegelt sind. Die beiden Verriegelungselemente 42a, 44a halten, wenn beide vollständig verriegelt sind, das schwenkbar gelagerte Wippenelement 78a im Gleichgewicht, insbesondere in der Neutralstellung. Das Wippenelement 78a weist dazu an seiner Anlageseite 86a Kontaktierungsbereiche auf, an denen die Verriegelungselemente 42a, 44a anliegen. Die Kontaktierungsbereiche weisen jeweils einen gleich großen Abstand zu der Schwenkachse auf, um die das Wippenelement 78a gelagert ist. Der beiden Kontaktbereiche, an denen jeweils eines der Verriegelungselemente 42a, 44a anliegt, sind an aufeinander gegenüberliegenden Seiten der Schwenkachse des Wippenelements 78a angeordnet. Das Wippenelement 78a weist in seitlichen Kantenbereichen 92a, 94a der Anlageseite 86a Abrundungen auf. Durch die Abrundungen kann in einem verkippten Zustand des Wippenelements 78a ein Raum geschaffen werden, durch den das nicht vollständig verriegelte Verriegelungselement 42a, 44a an dem Wippenelement 78a vorbei in die Ausnehmung 52a bewegt werden kann (Siehe Figur 5). So kann eine Reparatur des nicht vollständig verriegelten Verriegelungselements 42a, 44a einfach erfolgen.

Das Wippenelement 78a ist bei einer unvollständigen Verriegelung eines der Verriegelungselemente 42a, 44a dazu vorgesehen, durch das andere, vollständig verriegelte Verriegelungselement 42a, 44a verkippt zu werden und dadurch eine Verschiebung der verriegelten Türeinheit 22a in Schließrichtung 38a um die Indikationslänge 76a zuzulassen. Ist eines der beiden Verriegelungselemente 42a, 44a nicht vollständig verriegelt und greift nicht in die Ausnehmung 52a, welche die Formschlusselemente 46a, 48a ausbildet, ein, so liegt lediglich das eine vollständig verriegelte Verriegelungselement 42a, 44a an dem Wippenelement 78a, insbesondere an der Anlageseite 86a des Wippenelements 78a an. In Figur 4 ist beispielhaft gezeigt, wie lediglich das obere Verriegelungselement 42a vollständig verriegelt ist und das untere Verriegelungselement 44a, beispielsweise durch einen Defekt, nicht vollständig verriegelt ist. Das vollständig verriegelte Verriegelungselement 42a greift in die Ausnehmung 52a des Verriegelungsgrundkörpers 52a ein. Das nicht vollständig verriegelte Verriegelungselement 44a greift nicht in die Ausnehmung 52a des Verriegelungsgrundkörpers 50a ein. Das nicht vollständig verriegelte Verriegelungselement 44a ist in seiner Entriegelstellung. Dadurch schneidet lediglich das vollständig verriegelte Verriegelungselement 42a das Wippenelement 78a und kommt mit diesem in Kontakt. Das andere, nicht vollständig verriegelte Verriegelungselement 44a kommt nicht in Kontakt mit dem Wippenelement 78a. Das Wippenelement 78a gerät durch die einseitige Anlage durch das verriegelte Verriegelungselement 42a aus dem Gleichgewicht und wird durch die Federkraft der Federvorrichtung 68a, welche in Schließrichtung 38a auf die Türeinheit 22a wirkt, verschwenkt. Durch das Verschwenken gibt das Wippenelement 78a einen Weg frei, durch den sich die Türeinheit 22a um die Indikationslänge 76a verschieben kann, bis das vollständig verriegelte Verriegelungselement 42a an einer Wandung der Ausnehmung 52a anliegt, die das entsprechende Formschlusselement 46a ausbildet. Die Anlagefläche der Formschlusselemente 42a, 44a ist in Schließrichtung um die Indikationslänge von der Anlageseite 86a des Wippenelements 78a in Neutralstellung beabstandet. Dadurch kann bei einem Verkippen des Wippenelements 76a durch die einseitige Anlage lediglich eines der Verriegelungselemente 42a, 44a eine Verschiebung der Türeinheit 22a in Schließrichtung 38a um die Indikationslänge 76a durch die Federkraft der Federvorrichtung 68a erfolgen.

Die Verriegelungszustandsindikationseinheit 74a umfasst eine Sensorvorrichtung 88a, die dazu vorgesehen ist, eine unvollständige Verriegelung eines der Verriegelungselemente 42a, 44a indirekt zu erfassen. Die Sensorvorrichtung 88a ist insbesondere dazu vorgesehen, eine Verschiebung der Türeinheit 22a in Schließrichtung um die Indikationslänge 76a zu erfassen. Die Sensorvorrichtung 88a ist dazu vorgesehen, bei einer Verschiebung der Türeinheit 22a um die Indikationslänge in der Schließrichtung 38a ein Störungssignal auszugeben. Das Steuergerät 62a ist dazu vorgesehen, das Störungssignal der Sensorvorrichtung 88a auszuwerten. Durch ein Auswerten des Störungssignals der Sensorvorrichtung 88a kann das Steuergerät 62a vorteilhaft eine Verschiebung der Türeinheit 22a um die Indikationslänge 76a ermitteln und dadurch eine unvollständige Verriegelung eines der beiden Verriegelungselemente 42a, 44a erfassen. Die Sensorvorrichtung 88a ist einstückig mit der als Türsensoreinheit ausgebildeten Sensorvorrichtung 64a des Flugzeugsitzmoduls ausgebildet. Dadurch kann vorteilhaft die Sensorvorrichtung 64a für die Verriegelungszustandsindikationseinheit 74a verwendet werden und so Bauteile eingespart werden. Grundsätzlich wäre natürlich auch denkbar, dass die Verriegelungszustandsindikationseinheit 74a einen separat ausgebildeten Sensor aufweist, der eine Verschiebung der Türeinheit 22a in Schließrichtung um die Indikationslänge 76a erfasst.

Die Verriegelungszustandsindikationseinheit 74a weist eine Indikationseinheit 90a auf. Die Indikationseinheit 90a ist dazu vorgesehen, eine unvollständige Verriegelung einer der beiden Verriegelungselemente 42a, 44a anzuzeigen. Die Indikationseinheit 90a ist dazu vorgesehen, ein visuelles Signal auszugeben, wenn eines der beiden Verriegelungselemente 42a, 44a unvollständig verriegelt ist. Die Indikationseinheit 90a ist vorzugsweise dazu vorgesehen, zumindest zwei unterschiedliche Ausgangssignale anzuzeigen, um zum einen eine unvollständige Verriegelung eines der Verriegelungselemente 42a, 44a und zum anderen eine vollständige Verriegelung beider Verriegelungselemente 42a, 44a anzuzeigen. Die Indikationseinheit 90a ist als ein Leuchtmittel ausgebildet. Die als Leuchtmittel ausgebildete Indikationseinheit 90a ist dazu vorgesehen, zumindest zwei unterschiedliche Farben darzustellen. Die Indikationseinheit 90a ist dazu vorgesehen, bei einer unvollständigen Verriegelung eines der Verriegelungselemente 42a, 44a beispielsweise ein rotes Licht auszugeben und bei einer vollständigen Verriegelung beider Verriegelungselemente 42a, 44a ein rotes Licht. Grundsätzlich ist es auch denkbar, dass die Indikationseinheit 90a lediglich ein Signal ausgibt, wenn eines der beiden Verriegelungselemente 42a, 44a nicht vollständig verriegelt ist. Grundsätzlich ist ebenso denkbar, dass die Indikationseinheit 90a anders ausgebildet ist und ein anderes visuelles, akustisches und/oder haptisches Ausgangssignal ausgibt. Die Indikationseinheit 90a ist getrennt von den Verriegelungselementen 42a, 44a in einem oberen Bereich der Türeinheit 22a angeordnet. Dadurch ist die Indikationseinheit 90a vorteilhaft auf einer Höhe angeordnet, die leicht von einer Person, beispielsweise einem Bordpersonal erblickt werden kann. Grundsätzlich ist es auch denkbar, dass die Indikationseinheit 90a in einem oberen Bereich der Umhausungseinheit 14a angeordnet ist.

Die Verriegelungszustandsindikationseinheit 74a weist vorzugsweise eine weitere Indikationseinheit 108a auf. Die weitere Indikationseinheit 108a ist rein mechanisch ausgebildet. Die weitere Indikationseinheit 108a ist vorzugsweise teilweise von der Türeinheit 22a ausgebildet. Die weitere Indikationseinheit 108a weist eine erste Markierung auf, die an der Türeinheit 22a angeordnet ist. Die Indikationseinheit 104a weist eine zweite Markierung auf, die an der Umhausungseinheit 14a angeordnet ist. In einer vollständig geöffneten Stellung der Türeinheit 22a, bei der beide Verriegelungselemente 42a, 44a vollständig verriegelt sind, sind die beiden Markierungen der Indikationseinheit 108a deckungsgleich. Ist die Türeinheit in einer Verriegelstellung der Türeinheit um die Indikationslänge 76a verschoben, da eines der beiden Verriegelungselemente 42a, 44a nicht vollständig verriegelt ist, sind die Markierungen der Indikationseinheit 108a nicht mehr deckungsgleich, wodurch eine unvollständige Verriegelung eines der beiden Verriegelungselemente 42a, 44a angezeigt wird. Grundsätzlich ist es auch denkbar, dass die rein mechanische Indikationseinheit 108a ein Sichtfenster in der Türeinheit 22a aufweist, das bei einer Verschiebung der Türeinheit 22a in Schließrichtung 38a um die Indikationslänge deckungsgleich mit einer Indikationsmarkierung angeordnet ist, die dann von dem Gangbereich 20a erblickt werden kann.

Grundsätzlich wäre es in einer alternativen Ausgestaltung auch denkbar, dass die oben beschriebene Verriegelungszustandsindikationseinheit 74a rein mechanisch ausgebildet ist und lediglich die rein mechanische weitere Indikationseinheit 104a aufweist. Grundsätzlich ist es auch denkbar, dass auf die rein mechanische Indikationseinheit 104a verzichtet werden kann.

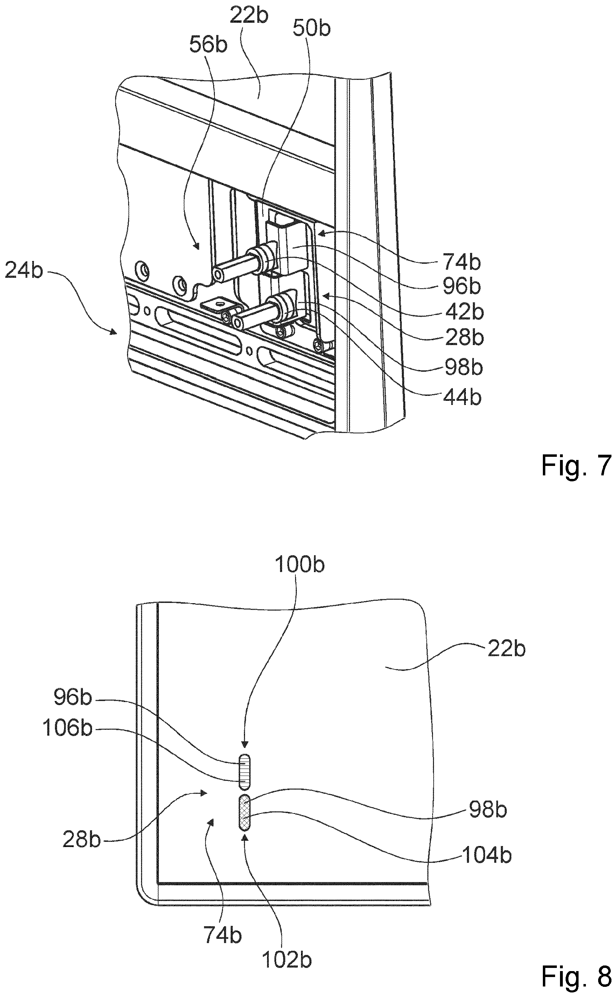

In Fig. 7 und 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 6, verwiesen werden kann. Zur Unterscheidung der Ausführungsbeispiele ist der Buchstabe a den Bezugszeichen des Ausführungsbeispiels in Fig. 1 bis 6 nachgestellt. In den Ausführungsbeispielen der Fig. 7 bis 8 ist der Buchstabe a durch den Buchstaben b ersetzt.

Die Figuren 7 und 8 zeigen einen Teil eines Flugzeugsitzmoduls in einem zweiten Ausführungsbeispiel. Das Flugzeugsitzmodul umfasst eine Türeinheit 22b. Die Türeinheit 22b ist dazu vorgesehen, zumindest in einem Betriebszustand einen Fluggastsitzbereich 10b zumindest teilweise von einem angrenzenden Kabinenbereich, insbesondere einem Gangbereich 20b, abzugrenzen. Das Flugzeugsitzmodul weist zur Lagerung der Türeinheit 22b eine Lagervorrichtung 24b auf. Mittels der Lagervorrichtung 24b ist die Türeinheit 22b zwischen der geöffneten Stellung und der geschlossenen Stellung verstellbar. Das Flugzeugsitzmodul umfasst eine Verriegelungsvorrichtung 28b. Die Verriegelungsvorrichtung 28b ist dazu vorgesehen, die Türeinheit 22b in der maximal geöffneten Verstaustellung zu verriegeln. Die Verriegelungsvorrichtung 28b umfasst eine elektrisch und/oder elektronisch ansteuerbare Aktuatorvorrichtung 56b. Die Aktuatorvorrichtung 56b umfasst ein erstes Verriegelungselement 42b. Die Aktuatorvorrichtung 56b umfasst ein zweites Verriegelungselement 44b.

Die Verriegelungsvorrichtung umfasst eine Verriegelungszustandsindikationseinheit 74b. Die Verriegelungszustandsindikationseinheit 74b ist dazu vorgesehen, zumindest in der maximal geöffneten Stellung der Türeinheit 22b eine unvollständige Verriegelung zumindest eines der beiden Verriegelungselemente 42b, 44b zu erfassen und anzuzeigen. Die Figuren 7 und 8 zeigen eine alternative Ausgestaltung der Verriegelungszustandsindikationseinheit 74b. Anstatt einer indirekten Erfassung einer unvollständigen Verriegelung eines Verriegelungselements 42b, 44b ist die Verriegelungszustandsindikationseinheit 74b des zweiten Ausführungsbeispiels dazu vorgesehen, eine unvollständige Verriegelung eines Verriegelungselements 42b, 44b direkt an dem entsprechende Verriegelungselement 42b, 44b zu erfassen. Im Unterschied zu dem ersten Ausführungsbeispiel ist die Verriegelungszustandsindikationseinheit 74b rein mechanisch ausgebildet.

Die Verriegelungszustandsindikationseinheit 74b weist je Verriegelungselement 42b, 44b ein federbelastetes Indikationselement 96b, 98b auf, die dazu vorgesehen sind, bei einer Verriegelung der Türeinheit 22b durch das jeweilige Verriegelungselement 42b, 44b in seiner Verriegelstellung aus einer ersten Stellung in eine zweite Stellung ausgelenkt zu werden. Die federbelasteten Indikationselemente 96b, 98b sind beweglich, insbesondere verschwenkbar an einem Verriegelungsgrundkörper 50b des Verriegelungsmoduls angebracht. Grundsätzlich wäre es auch denkbar, dass die Indikationselemente 96b, 98b an der Türeinheit beweglich angebunden sind. Die Indikationselemente 96b, 98b sind dazu vorgesehen, durch jeweils eines der Verriegelungselemente 42b, 44b bei dessen Verstellung in die Verriegelposition verstellt zu werden. In einer Neutralstellung sind die Indikationselemente 96b, 98b in einer ersten Stellung, die eine erste Indikationsstellung ausbildet. In der ersten Indikationsstellung indiziert das jeweilige Indikationselement 96b, 98b eine unvollständig bzw. nicht in die Verriegelstellung verbrachtes Verriegelungselement. In der ersten Indikationsstellung ist dazu eine erste Sichtfläche 104b, die beispielsweise rot eingefärbt ist, sichtbar. In der zweiten Stellung, die eine zweite Indikationsstellung ausbildet, sind die Indikationselemente 96b, 98b von dem jeweiligen Verriegelungselement verstellt. In der zweiten Indikationsstellung indiziert das jeweilige Indiktionselement 96b, 98b, dass das jeweilige Verriegelungselement 42b, 44b vollständig verriegelt ist. In der zweiten Indikationsstellung ist dazu eine zweite Sichtfläche 106b, die beispielsweise grün eingefärbt ist, sichtbar. Die

Verriegelungszustandsindikationseinheit 74b weist je federbelastetem Indikationselement 96b, 98b ein Sichtfenster 100b, 102b auf, durch das eine Stellung des jeweiligen Indikationselements 96b, 98b einsehbar ist. Durch die Sichtfenster 100b, 102b ist abhängig von einer Stellung der Indikationselemente 96b, 98b jeweils die eine anzuzeigende der beiden Sichtflächen 104b, 106b des jeweiligen Indikationselements 96b, 98b sichtbar.

### Bezugszeichen

- 10: Fluggastsitzbereich
- 12: Flugzeugsitz
- 14: Umhausungseinheit
- 16: Umhausungselement
- 18: Durchgangsbereich
- 20: Gangbereich
- 22: Türeinheit
- 24: Lagervorrichtung
- 26: Umhausungselement
- 28: Verriegelungsvorrichtung
- 30: Lagermodul
- 32: Lagermodul
- 34: Lagerelement
- 36: Lagerelement
- 38: Schließrichtung
- 40: Öffnungsrichtung
- 42: Verriegelungselement
- 44: Verriegelungselement
- 46: Formschlusselement
- 48: Formschlusselement
- 50: Verriegelungsgrundkörper
- 52: Ausnehmung
- 56: Aktuatorvorrichtung
- 58: Aktuator
- 60: Betätigungsschalter
- 62: Steuergerät
- 64: Sensorvorrichtung
- 66: Grundkörper
- 68: Federvorrichtung
- 70: Federelement
- 72: Federelement
- 74: Verriegelungszustandsindikationse inheit
- 76: Indikationslänge
- 78: Wippenelement
- 80: Anbindungsrahmen
- 82: Durchgangsöffnung
- 84: Lagerbolzen
- 86: Anlageseite
- 88: Sensorvorrichtung
- 90: Indikationseinheit
- 92: Kantenbereich
- 94: Kantenbereich
- 96: Indikationselement
- 98: Indikationselement
- 100: Sichtfenster
- 102: Sichtfenster
- 104: Sichtfläche
- 106: Sichtfläche
- 108: Indikationseinheit

## Patentansprüche

1. Flugzeugsitzmodul mit einem Fluggastsitzbereich (10a; 10b), mit einer Türeinheit (22a; 22b), die zumindest dazu vorgesehen ist, zumindest in einem Betriebszustand einen Durchgangsbereich (18a; 18b) zu dem Fluggastsitzbereich (10a; 10b) zu verschließen, mit einer Verriegelungsvorrichtung (28a; 28b) für die Türeinheit (22a; 22b), die dazu vorgesehen ist, die Türeinheit (22a; 22b) in einer geöffneten Stellung, insbesondere einer maximal geöffneten Verstaustellung, zu verriegeln und dazu zumindest eine Aktuatorvorrichtung (56a; 56b) umfasst, die zumindest zwei beweglich gelagerte Verriegelungselemente (42a, 44a; 42b, 44b) aufweist, die jeweils zwischen einer Verriegelposition und einer Entriegelposition verstellbar sind, **dadurch gekennzeichnet, dass** die Verriegelungsvorrichtung (28a; 28b) eine Verriegelungszustandsindikationseinheit (74a; 74b) aufweist, die dazu vorgesehen ist, in der maximal geöffneten Stellung der Türeinheit (22a; 22b) eine unvollständige Verriegelung zumindest eines der beiden Verriegelungselemente (42a, 44a; 42b, 44b) zu erfassen und anzuzeigen.

2. Flugzeugsitzmodul nach Anspruch 1, **dadurch gekennzeichnet, dass** die Verriegelungszustandsindikationseinheit (74a) eine Indikationseinheit (90a) aufweist, die eine unvollständige Verriegelung einer der beiden Verriegelungselemente (42a, 44a) anzeigt, getrennt von den Verriegelungselementen (42a, 44a) und vorzugsweise in einem oberen Bereich der Türeinheit (22a) angeordnet ist.

3. Flugzeugsitzmodul nach einem der vorhergehenden Ansprüche, **dadurch gekennzeichnet, dass** die Verriegelungszustandsindikationseinheit (74a) bei einer unvollständigen Verriegelung eines der Verriegelungselemente (42a, 44a) dazu vorgesehen ist, eine Verschiebung der verriegelten Türeinheit (22a) in Schließrichtung (38a) um eine Indikationslänge (76a) zuzulassen.

4. Flugzeugsitzmodul nach einem der vorhergehenden Ansprüche, **dadurch gekennzeichnet, dass** die Verriegelungszustandsindikationseinheit (74a) zumindest ein Wippenelement (78a) aufweist, das dazu vorgesehen ist, die Verriegelungselemente (42a, 44a) in ihrer Verriegelposition zu kontaktieren.

5. Flugzeugsitzmodul nach Anspruch 4, **dadurch gekennzeichnet, dass** das Wippenelement (78a) um eine Schwenkachse verschwenkbar gelagert ist, die koaxial zu Bewegungsachsen der Verriegelungselemente (42a, 44a) verläuft und einen gleichen Abstand zu den Bewegungsachsen der Verriegelungselemente (42a, 44a) aufweist.

6. Flugzeugsitzmodul nach Anspruch 4 oder 5, **dadurch gekennzeichnet, dass** das Wippenelement (78a) bei einer unvollständigen Verriegelung eines der Verriegelungselemente (42a, 44a; 42b, 44b) dazu vorgesehen ist, durch das andere Verriegelungselement (42a, 44a; 42b, 44b) verkippt zu werden und dadurch eine Verschiebung der verriegelten Türeinheit (22a) in Schließrichtung (38a) um eine Indikationslänge (76a) zuzulassen.

7. Flugzeugsitzmodul nach einem der vorhergehenden Ansprüche, **dadurch gekennzeichnet, dass** die Verriegelungszustandsindikationseinheit (74a) zumindest eine Sensorvorrichtung (88a) umfasst, die dazu vorgesehen ist, eine unvollständige Verriegelung eines der Verriegelungselemente (42a, 44a; 42b, 44b), insbesondere indirekt zu erfassen.

8. Flugzeugsitzmodul nach Anspruch 7, **dadurch gekennzeichnet, dass** die Sensorvorrichtung (88a) einstückig mit einer als Türpositionssensor ausgebildeten Sensorvorrichtung (64a) ausgebildet ist.

9. Flugzeugsitzmodul nach einem der vorhergehenden Ansprüche, **dadurch gekennzeichnet, dass** die Indikationseinheit (90a) zumindest teilweise von der Türeinheit (22a) ausgebildet ist.

10. Flugzeugsitzmodul nach einem der vorhergehenden Ansprüche, **dadurch gekennzeichnet, dass** die Verriegelungszustandsindikationseinheit (74b) je Verriegelungselement (42b, 44b) ein federbelastetes Indikationselement (96b, 98b) aufweist, die dazu vorgesehen sind, bei einer Verriegelung der Türeinheit (22b) durch das jeweilige Verriegelungselement (42a, 44a; 42b, 44b) in seiner Verriegelstellung aus einer ersten Stellung in eine zweite Stellung ausgelenkt zu werden.

11. Flugzeugsitzmodul nach Anspruch 9, **dadurch gekennzeichnet, dass** die Verriegelungszustandsindikationseinheit (74b) zumindest ein Sichtfenster (100b; 102b) aufweist, durch das eine Stellung zumindest eines der Indikationselemente (96b, 98b) einsehbar ist.

12. Flugzeugsitzmodul zumindest nach Anspruch 1, **dadurch gekennzeichnet, dass** die Verriegelungszustandsindikationseinheit (74b) rein mechanisch ausgebildet ist.

## Claims

1. Aircraft seat module
with a flight passenger seating area (1 0a; 10b),
with a door unit (22a; 22b) which in at least one operation state is configured at least for closing a passage region (18a; 18b) to the flight passenger seating area (10a; 10b),
with a locking device (28a; 28b) for the door unit (22a; 22b) which is configured to lock the door unit (22a; 22b) in an open position, in particular a maximally open stowage position, and to this end comprises at least one actuator device (56a; 56b) having at least two movably supported locking elements (42a, 44a; 42b, 44b) which are in each case adjustable between a locking position and an unlocking position,
**characterized in that** the locking device (28a; 28b) comprises a locking state indication unit (74a; 74b), which is configured, in the maximally open position of the door unit (22a; 22b), to detect and indicate incomplete locking of at least one of the two locking elements (42a, 44a; 42b, 44b).

2. Aircraft seat module according to claim 1,
**characterized in that** the locking state indication unit (74a) comprises an indication unit (90a), which indicates incomplete locking of one of the two locking elements (42a, 44a) and is arranged separately from the locking elements (42a, 44a), preferably in an upper region of the door unit (22a).

3. Aircraft seat module according to one of the preceding claims,
**characterized in that** the locking state indication unit (74a) is configured in the event of incomplete locking of one of the locking elements (42a, 44a), to permit a displacement of the locked door unit (22a) in the closing direction (38a) by an indication length (76a).

4. Aircraft seat module according to one of the preceding claims,
**characterized in that** the locking state indication unit (74a) comprises at least one rocker element (78a), which is configured to contact the locking elements (42a, 44a) in their locking position.

5. Aircraft seat module according to claim 4,
**characterized in that** the rocker element (78a) is supported so as to be pivotable around a pivot axis which runs coaxially with movement axes of the locking elements (42a, 44a) and is equidistant from the movement axes of the locking elements (42a, 44a).

6. Aircraft seat module according to claim 4 or 5,
**characterized in that** the rocker element (78a) is configured, in the event of incomplete locking of one of the locking elements (42a, 44a; 42b, 44b), to be tilted by the other locking element (42a, 44a; 42b, 44b), and, as a result, to permit a displacement of the locked door unit (22a) in the closing direction (38a) by an indication length (76a).

7. Aircraft seat module according to one of the preceding claims,
**characterized in that** the locking state indication unit (74a) comprises at least one sensor device (88a) which is configured to, in particular indirectly, detect incomplete locking of one of the locking elements (42a, 44a; 42b, 44b).

8. Aircraft seat module according to claim 7,
**characterized in that** the sensor device (88a) is realized integrally with a sensor device (64a) that is embodied as a door position sensor.

9. Aircraft seat module according to one of the preceding claims,
**characterized in that** the indication unit (90a) is realized at least partially by the door unit (22a).

10. Aircraft seat module according to one of the preceding claims,
**characterized in that** the locking state indication unit (74b) for each locking element (42b, 44b) comprises one spring-loaded indication element (96b, 98b), which is configured, in the event of the door unit (22b) being locked, to be deflected from a first position to a second position by the respective locking element (42a, 44a; 42b, 44b) in its locking position.

11. Aircraft seat module according to claim 9,
**characterized in that** the locking state indication unit (74b) has at least one viewing window (100b; 102b) through which a position of at least one of the indication elements (96b, 98b) can be viewed.

12. Aircraft seat module at least according to claim 1,
**characterized in that** the locking state indication unit (74b) is of a purely mechanical implementation.

## Revendications

1. Module de siège d'aéronef,
avec une zone de siège de passager d'aéronef (10a ; 10b),
avec une unité-portière (22a ; 22b) qui est au moins prévue pour fermer, en au moins un état de fonctionnement, une zone de passage (18a ; 18b) vers la zone de siège de passager d'aéronef (1 0a ; 10b),
avec un dispositif de verrouillage (28a ; 28b) pour l'unité-portière (22a ; 22b), qui est prévu pour verrouiller l'unité-portière (22a ; 22b) dans une position ouverte, en particulier une position de rangement ouverte au maximum, et qui comprend à cet effet au moins un dispositif actionneur (56a ; 56b) incluant au moins deux éléments de verrouillage (42a, 44a ; 42b, 44b) qui sont supportés de manière mobile et chacun desquels peut être ajusté entre une position de verrouillage et une position de déverrouillage,
**caractérisé en ce que** le dispositif de verrouillage (28a ; 28b) comprend une unité indiquant l'état de verrouillage (74a ; 74b) qui est prévue, dans la position ouverte au maximum de l'unité-portière (22a ; 22b), pour détecter et indiquer un verrouillage incomplet d'au moins l'un des deux éléments de verrouillage (42a, 44a ; 42b, 44b).

2. Module de siège d'aéronef selon la revendication 1,
**caractérisé en ce que** l'unité indiquant l'état de verrouillage (74a) comprend une unité d'indication (90a) qui indique un verrouillage incomplet de l'un des deux éléments de verrouillage (42a, 44a) et qui est disposée séparément des éléments de verrouillage (42a, 44a), de préférence dans une zone supérieure de l'unité-portière (22a).

3. Module de siège d'aéronef selon l'une des revendications précédentes,
**caractérisé en ce que** l'unité indiquant l'état de verrouillage (74a) est prévue, en cas de verrouillage incomplet de l'un des éléments de verrouillage (42a, 44a), pour permettre un déplacement de l'unité-portière verrouillée (22a) dans la direction de fermeture (38a) par une longueur d'indication (76a).

4. Module de siège d'aéronef selon l'une des revendications précédentes,
**caractérisé en ce que** l'unité indiquant l'état de verrouillage (74a) comprend au moins un élément basculant (78a) prévu pour contacter les éléments de verrouillage (42a, 44a) dans leur position de verrouillage.

5. Module de siège d'aéronef selon la revendication 4,
**caractérisé en ce que** l'élément basculant (78a) est supporté pivotablement autour d'un axe de pivotement qui s'étend coaxialement avec des axes de mouvement des éléments de verrouillage (42a, 44a) et qui est équidistante aux axes de mouvement des éléments de verrouillage (42a, 44a).

6. Module de siège d'aéronef selon la revendication 4 ou 5,
**caractérisé en ce que** l'élément basculant (78a) est prévu, en cas de verrouillage incomplet de l'un des éléments de verrouillage (42a, 44a ; 42b, 44b), pour être basculé par l'autre élément de verrouillage (42a, 44a ; 42b, 44b) et pour permettre ainsi un déplacement de l'unité-portière verrouillée (22a) dans la direction de fermeture (38a) par une longueur d'indication (76a).

7. Module de siège d'aéronef selon l'une des revendications précédentes,
**caractérisé en ce que** l'unité indiquant l'état de verrouillage (74a) comprend au moins un dispositif capteur (88a) prévu pour, en particulier indirectement, détecter un verrouillage incomplet de l'un des éléments de verrouillage (42a, 44a ; 42b, 44b).

8. Module de siège d'aéronef selon la revendication 7,
**caractérisé en ce que** le dispositif capteur (88a) est réalisé intégralement avec un dispositif capteur (64a) qui est réalisé comme capteur de position de portière.

9. Module de siège d'aéronef selon l'une des revendications précédentes, **caractérisé en ce que** l'unité d'indication (90a) est réalisée au moins partiellement par l'unité-portière (22a).

10. Module de siège d'aéronef selon l'une des revendications précédentes, **caractérisé en ce que** l'unité indiquant l'état de verrouillage (74b) présente pour chaque élément de verrouillage (42b, 44b) un élément d'indication chargé à ressort (96b, 98b), lesdits éléments d'indication (96b, 98b) étant prévus, en cas de verrouillage de l'unité-portière (22b) dans sa position de verrouillage par l'élément de verrouillage respectif (42a, 44a ; 42b, 44b), pour être déviés d'une première position à une deuxième position.

11. Module de siège d'aéronef selon la revendication 9,
**caractérisé en ce que** l'unité indiquant l'état de verrouillage (74b) présente au moins une fenêtre d'observation (100b ; 102b) permettant d'observer une position d'au moins l'un des éléments d'indication (96b, 98b).

12. Module de siège d'aéronef au moins selon la revendication 1,
**caractérisé en ce que** l'unité indiquant l'état de verrouillage (74b) est réalisée purement de façon mécanique.
